# EUROPÄISCHE PATENTSCHRIFT

(11) **EP 2 066 926 B1**
(45) Veröffentlichungstag und Bekanntmachung des Hinweises auf die Patenterteilung: **29.06.2011**
(21) Anmeldenummer: 07803168.9
(22) Anmeldetag: 03.09.2007
(51) Int. Cl.: F16H 57/04

(54) **VERFAHREN ZUR NIVEAUREGULIERUNG EINES ÖLSUMPFABSCHNITTS EINES ZUMINDEST ZWEI ÖLSUMPFABSCHNITTE AUFWEISENDEN ÖLSUMPFS**
METHOD FOR REGULATING THE LEVEL OF A SECTION OF AN OIL TRAY COMPRISING AT LEAST TWO SECTIONS
PROCÉDÉ DE RÉGULATION DE NIVEAU D'UNE SECTION D'UN COLLECTEUR D'HUILE COMPRENANT AU MOINS DEUX SECTIONS

(30) Priorität: 26.09.2006 DE 102006045240
(43) Veröffentlichungstag der Anmeldung: 10.06.2009
(73) Patentinhaber: ZF Friedrichshafen AG, 88038 Friedrichshafen (DE); Dr.Ing. H.C. F. Porsche Aktiengesellschaft, 70435 Stuttgart (DE)
(72) Erfinder: JABS, Sven, 88250 Weingarten (DE); GLÜCK, Martin, 14770 Brandenburg (DE)
(86) Internationale Anmeldenummer: PCT/EP2007/059182
(87) Internationale Veröffentlichungsnummer: WO 2008/037566

(56) Entgegenhaltungen:
- EP-A- 1 128 095
- EP-A- 1 452 778
- WO-A-2005/059409
- DE-A1- 1 801 917
- DE-A1- 4 321 655
- DE-A1- 10 034 561
- DE-A1- 10 260 354
- US-A1- 2006 063 633

## Beschreibung

Die vorliegende Erfindung bezieht sich auf ein Verfahren zur Niveauregulierung eines Ölsumpfabschnitts eines zumindest zwei Ölsumpfabschnitte aufweisenden Ölsumpfs eines Getriebes mit Tauchschmierung gemäß dem Oberbegriff des Patentanspruchs 1. Des weiteren bezieht sich die Erfindung auf eine Einrichtung zur Niveauregulierung eines Ölsumpfabschnitts eines zumindest zwei Ölsumpfabschnitte aufweisenden Ölsumpfs eines Getriebes mit Tauchschmierung und insbesondere auf eine Einrichtung zur Durchführung des erfindungsgemäßen Verfahrens.

Innerhalb eines Getriebes mit Tauchschmierung, insbesondere eines Getriebes in Vorgelegebauweise, kommt es durch die verschiedenen Durchmesser der Zahnräder zu unterschiedlich starkem Eintauchen der Zahnräder in den Ölsumpf. Taucht eine Radpaarung nicht oder nur ungenügend in den Ölsumpf ein, so ist eine ausreichende Schmierung und Kühlung im Zahneingriff nicht gewährleistet, was in nachteiliger Weise aufgrund der Mangelschmierung an der Laufverzahnung in einem vorzeitigen Verschleiß resultiert.

Aus dem Stand der Technik ist bekannt, zur gezielten Anhebung bzw. Absenkung des Ölstandes in bestimmten Sektionen im Ölsumpf Ölstaubleche einzusetzen, so dass einzelne Ölsumpfabschnitte entstehen, wobei die Anhebung bzw. Absenkung des Ölniveaus beispielsweise über die Gehäusewandung bzw. über Rinnen realisiert wird, was in nachteiliger Weise mit zusätzlichen Kosten verbunden ist.

Das Dokument DE10034561 A1 offenbart ein Getriebe mit Tauchschmierung, bei dem zwei Bereiche des Ölsumpfs durch ein vertikales Staublech voneinander getrennt sind.

Der vorliegenden Erfindung liegt die Aufgabe zugrunde, ein Verfahren zur Niveauregulierung eines Ölsumpfabschnitts eines zumindest zwei Ölsumpfabschnitte aufweisenden Ölsumpfs eines Getriebes mit Tauchschmierung anzugeben, welches eine ausreichende Schmierung und Kühlung der Zahnräder des Getriebes gewährleistet. Des weiteren soll eine Einrichtung zur Niveauregulierung eines Ölsumpfabschnitts eines zumindest zwei Ölsumpfabschnitte aufweisenden Ölsumpfs angegeben werden, welche zur Durchführung des erfindungsgemäßen Verfahrens geeignet ist.

Diese Aufgabe wird für ein Verfahren zur Niveauregulierung durch die Merkmale des Patentanspruchs 1 gelöst. Eine Einrichtung zur Niveauregulierung und insbesondere zur Durchführung des erfindungsgemäßen Verfahrens ist Gegenstand des Patentanspruchs 4. Weitere erfindungsgemäße Ausgestaltungen und Vorteile gehen aus den entsprechenden Unteransprüchen hervor.

Demnach wird zur Niveauregulierung eines Ölsumpfabschnitts eines zumindest zwei Ölsumpfabschnitte aufweisenden Ölsumpfs vorgeschlagen, das Schleuderöl eines in den Sumpf eines Ölsumpfabschnitts eintauchenden Zahnrades gezielt in einen anderen Ölsumpfabschnitt zu lenken.

Gemäß der Erfindung wird das Schleuderöl eines in den Sumpf eintauchenden Rades in einen benachbarten Ölsumpfabschnitt gelenkt, wobei die Trennung beider Sumpfabschnitte durch ein Staublech erfolgt und wobei die Durchführung des Öls durch das Staublech über eine Öffnung oberhalb des angestrebten Ölniveaus realisiert wird.

Zum Umlenken des Schleuderöls ist eine Umlenkeinrichtung vorgesehen, welche vorzugsweise unmittelbar am Staublech unterhalb des Öl zuführenden Zahnrades angeordnet ist. Das Öl wird vom sich drehenden Zahnrad aus dem Sumpf gezogen und radial abgeschleudert. Anschließend wird es über die vorzugsweise als Schale ausgebildete Umlenkeinrichtung nach oben und zur Seite umgelenkt, so dass es durch die Öffnung am Staublech hinter das Staublech gelenkt wird. Es ist auch möglich, dass die Umlenkeinrichtung eine weitere geeignete Form aufweist.

Durch die erfindungsgemäße Konzeption wird auf einfache und kostengünstige Weise eine ausreichende Schmierung und Kühlung der Zahnräder eines Getriebes mit Tauchschmierung gewährleistet.

Die Erfindung wird im folgenden anhand der beigefügten Figuren beispielhaft näher erläutert.
Es zeigen:
- Fig. 1: eine schematische Frontalansicht der erfindungsgemäßen Einrichtung zur Niveauregulierung eines Ölsumpfabschnitts eines zumindest zwei Ölsumpfabschnitte aufweisenden Öl- sumpfs;
- Fig. 2: eine schematische Seitenansicht der erfindungsgemäßen Einrichtung zur Niveauregulierung eines Ölsumpfabschnitts eines zumindest zwei Ölsumpfabschnitte aufweisenden Öl- sumpfs und
- Fig. 3: eine schematische Draufsicht der erfindungsgemäßen Einrichtung zur Niveauregulierung eines Ölsumpfabschnitts eines zumindest zwei Ölsumpfabschnitte aufweisenden Öl- sumpfs.

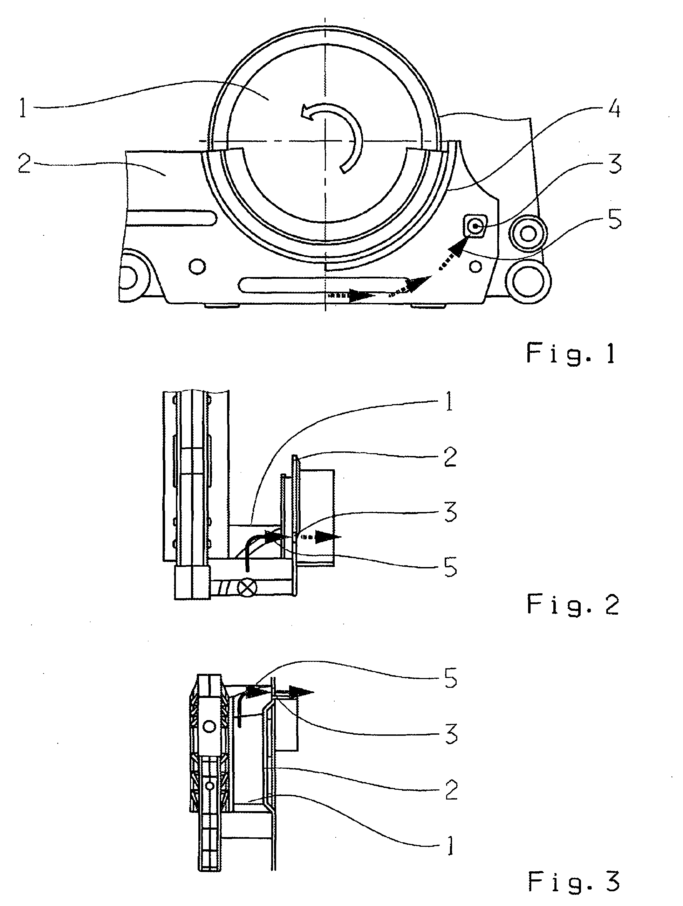

In Fig. 1, 2 und 3 ist ein sich in einem ersten Ölsumpfabschnitt eines Ölsumpfs eines Getriebes mit Tauchschmierung in Pfeilrichtung drehendes Zahnrad 1 dargestellt, wobei die Trennung des ersten Ölsumpfabschnitts von einem zweiten Ölsumpfabschnitt durch ein Staublech 2 erfolgt. Gemäß der Erfindung ist am Staublech 2 oberhalb des im zweiten benachbarten Ölsumpfabschnitt angestrebten Ölniveaus eine Öffnung 3 vorgesehen, durch die das Schleuderöl in den zweiten Ölsumpfabschnitt gelenkt wird.

Zum Umlenken des Schleuderöls ist eine vorzugsweise schalenförmig ausgebildete Umlenkeinrichtung **4** vorgesehen, welche sich unmittelbar am Staublech 2 unterhalb des Öl zuführenden Zahnrades 1 befindet. Das Öl wird von Zahnrad aus dem Sumpf gezogen, radial abgeschleudert und über die Umlenkeinrichtung nach oben und zur Seite umgelenkt, so dass es durch die Öffnung 3 hinter das Staublech 2 in den benachbarten Ölsumpfabschnitt gelenkt wird. Die Bewegungsrichtung des Öls ist in den Figuren durch die Pfeile 5 veranschaulicht.

### Bezugszeichen

- 1: Zahnrad
- 2: Staublech
- 3: Öffnung
- 4: Umlenkeinrichtung
- 5: Bewegungsrichtung des Öls

## Patentansprüche

1. Verfahren zur Niveauregulierung eines Ölsumpfabschnitts eines zumindest zwei Ölsumpfabschnitte aufweisenden Ölsumpfs eines Getriebes mit Tauchschmierung, wobei die Trennung der Sumpfabschnitte durch ein Staublech (2) erfolgt, **dadurch gekennzeichnet, dass** das Schleuderöl eines in den Sumpf eines Ölsumpfabschnitts eintauchenden Zahnrades (1) gezielt in einen benachbarten Ölsumpfabschnitt gelenkt wird.

2. Verfahren zur Niveauregulierung eines Ölsumpfabschnitts eines zumindest zwei Ölsumpfabschnitte aufweisenden Ölsumpfs nach Anspruch 1, **dadurch gekennzeichnet, dass** die Durchführung des Öls über eine im Staublech (2) vorgesehene Öffnung (3) oberhalb des angestrebten Ölniveaus realisiert wird.

3. Verfahren zur Niveauregulierung eines Ölsumpfabschnitts eines zumindest zwei Ölsumpfabschnitte aufweisenden Ölsumpfs nach Anspruch 2, **dadurch gekennzeichnet, dass** das Schleuderöl über eine Umlenkeinrichtung (4) nach oben und zur Seite umgelenkt wird, so dass es durch die Öffnung (3) hinter das Staublech (2) in den benachbarten Ölsumpfabschnitt gelenkt wird.

## Claims

1. Method for regulating the level of an oilpan portion of an oilpan, having at least two oilpan portions, of a transmission with oil bath lubrication, the pan portions being separated by a baffle plate (2), **characterized in that** the centrifugal oil of a gearwheel (1) penetrating into the pan of an oilpan portion is steered in a directed manner into an adjacent oilpan portion.

2. Method for regulating the level of an oilpan portion of an oilpan having at least two oilpan portions, according to Claim 1, **characterized in that** the oil is led through via an orifice (3), provided in the baffle plate (2), above the desired oil level.

3. Method for regulating the level of an oilpan portion of an oilpan having at least two oilpan portions, according to Claim 2, **characterized in that** the centrifugal oil is deflected upwards and to the side via a deflecting device (4), so that it is steered through the orifice (3) behind the baffle plate (2) into the adjacent oilpan portion.

## Revendications

1. Procédé de régulation du niveau d'une section d'un collecteur d'huile d'une transmission comprenant au moins deux sections de collectionneur d'huile, avec lubrification par immersion, la séparation des sections de collecteur étant réalisée par une tôle de retenue (2), **caractérisé en ce que** l'huile centrifuge d'une roue dentée (1) plongeant dans le collecteur d'une section de collecteur d'huile est guidée de manière ciblée dans une section adjacente du collecteur d'huile.

2. Procédé de régulation du niveau d'une section d'un collecteur d'huile d'une transmission comprenant au moins deux sections de collectionneur d'huile selon la revendication 1, **caractérisé en ce que** le guidage de l'huile est réalisé par le biais d'une ouverture (3) prévue dans la tôle de retenue (2) au-dessus du niveau d'huile souhaité.

3. Procédé de régulation du niveau d'une section d'un collecteur d'huile d'une transmission comprenant au moins deux sections de collectionneur d'huile selon la revendication 2, **caractérisé en ce que** l'huile centrifuge est déviée par le biais d'un dispositif déflecteur (4) vers le haut et vers le côté, de sorte qu'elle soit guidée à travers l'ouverture (3) derrière la tôle de retenue (2) dans la section de collecteur d'huile adjacente.
